(19) Europäisches Patentamt / European Patent Office / Office européen des brevets

(11) **EP 2 624 610 A1**

(12) **EUROPEAN PATENT APPLICATION**

(43) Date of publication:
**07.08.2013 Bulletin 2013/32**

(51) Int Cl.:
**H04W 8/20** (2009.01)

(21) Application number: **12305116.1**

(22) Date of filing: **31.01.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(72) Inventor: **Thibault de Chanvalon, Bernard 44700 Orvault (FR)**

(74) Representative: **Kleinbub, Oliver et al Alcatel-Lucent Deutschland AG Intellectual Property & Standards Lorenzstrasse 10 70435 Stuttgart (DE)**

(71) Applicant: **Alcatel Lucent 75007 Paris (FR)**

(54) **Transmission of data from a plurality of devices using the same MSISDN / IMSI in a telecommunications network**

(57) The invention concerns a method for transmitting data in a telecommunications network (100), wherein the device (101) is adapted to transmit data in the telecommunications network (100), in time slots (1,2,3,4,5,6), wherein the individual time slot (1,2,3,4,5,6) of the device (101) is synchronized with the time slots (1,2,3,4,5,6) of a group of devices (101) to provide for at least partially overlap free transmission of each of the devices (101) of the group of devices(101), wherein the data is transmitted with the same International Mobile Subscriber Identity or Mobile Station International Subscriber Directory Number by each of the devices (101) of the group of devices (101).

Fig.2

## Description

### Field of the invention

A method, a system, a device and a server for transmitting data in a telecommunications network.

### Background

In smart grids, multiple smart meters are deployed to measure data and send the measured data to a server via data links. The data links may be established using mobile phone networks using known implementations capable of transmitting data from mobile phones via a telecommunications network. To that end each smart meter may be fitted with a Subscriber Identity Module having a unique International Mobile Subscriber Identity and Mobile Station International Subscriber Directory Number stored on it. The unique pairs may be assigned to only one Subscriber Identity Module and Home Location Register.

### Summary

The object of the invention is to provide a more flexible infrastructure and protocol to use network resources more efficiently and reduce cost.
The main idea of the invention is a plurality of devices adapted to transmit data in a telecommunications network, wherein the devices are adapted to transmit data in time slots, wherein the individual time slots of the devices of the group of devices are synchronized to provide for at least partially overlap free transmission of each device, wherein the data is transmitted with the same International Mobile Subscriber Identity or Mobile Station International Subscriber Directory Number.
Advantageously the same International Mobile Subscriber Identity or Mobile Station International Subscriber Directory Number is stored on data storage in the device.
Advantageously the same International Mobile Subscriber Identity or Mobile Station International Subscriber Directory Number is stored on removable data storage, in particular a Subscriber Identity Module.
Advantageously the information of the time slot synchronization is stored in the data storage or the removable data storage.
Advantageously the information of the time slot synchronization is send to the devices.
Advantageously the time slots are of a predetermined length.
Advantageously the time slot length is the same for all devices.
Advantageously the time slot for each device has an individual time slot length.
Further developments of the invention can be gathered from dependent claims and the following description.

### Brief description of the figures

In the following the invention will be explained further making reference to the attached drawings.

Fig. 1 schematically shows a first part of a telecommunication network.

Fig. 2 schematically shows a first sequence diagram.

Fig. 3 schematically shows a first flow chart.

### Description of the embodiments

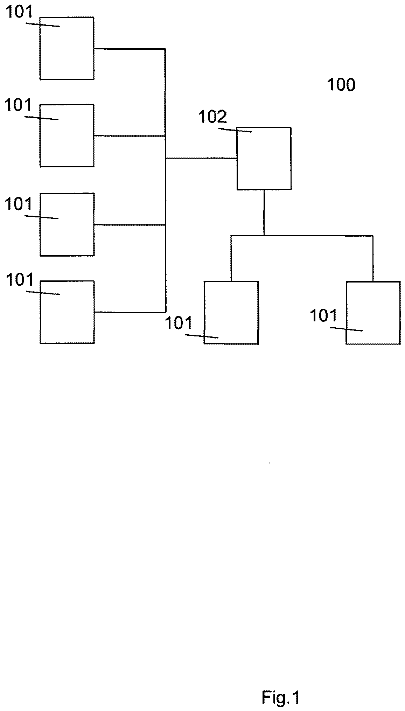

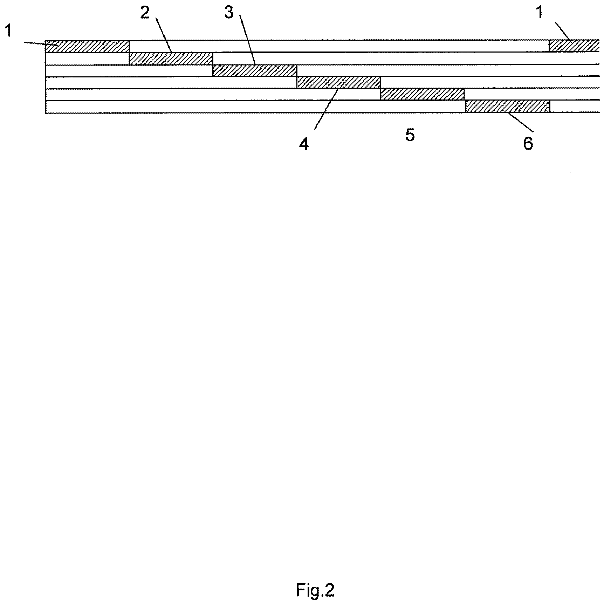

A system and method for transmitting data by time sharing a single International Mobile Subscriber Identity, well known as IMSI, or Mobile Station International Subscriber Directory Number, well known as MSISDN, between a group of devices, in particular a group of smart sensors is described below making reference to Figure 1 and 2.
Goal is to use a single mobile phone account per group of devices. This provides a low cost communication backbone on a legacy mobile network to smart meters, sensors insulated, statistic devices and weather stations. The group of devices uses the same MSISDN and the same IMSI so the Home Location Register, well known as HLR, and Mobile Switching Centre, well known as MSC, and other network resources are used more efficiently and cost reduced. The idea is not limited to mobile telecommunications networks. The idea may be used in other telecommunications networks or computer networks likewise.
Figure 1 shows a first part of a telecommunication network 100.

The telecommunication network 100 comprises a server 102 and a plurality of devices 101, in the example six devices 101, adapted to transmit data in the telecommunications network 100. Likewise the server 102 or one or more devices 101 may be in a computer network. In case telecommunications network 100 and computer network are used, they may be connected via gateways.

The server 102 and the devices 101 are connected via data links. The data links are depicted in figure 1 as solid lines connecting the server 102 with the devices 101. The data links may be direct data links, e.g. via a wired or a wireless network. Preferably the data links are according to the Global System for Mobile Communications, well known as GSM, the Universal Mobile Telecommunications System, well known as UMTS or the Long Term Evolution standard, well known as LTE. Furthermore the data links may be via several network nodes and servers not depicted in figure 1.

The six devices 101 form a group of devices having the same International Mobile Subscriber Identity or Mobile Station International Subscriber Directory Number. The devices 101 may have the same pair of International Mobile Subscriber Identity and Mobile Station International Subscriber Directory Number.

Figure 2 shows a sequence of time slots 1, 2, 3, 4, 5, 6 for the example of the six devices 101. As depicted in figure 2 the individual time slots 1, 2, 3, 4, 5, 6 of the devices 101 are synchronized to provide for at least partially overlap free transmission of each device 101. The sequence of time slots 1, 2, 3, 4, 5, 6 is an example other time slot numbers may be used.

The data is transmitted from each of the devices 101 with the same International Mobile Subscriber Identity and Mobile Station International Subscriber Directory Number pair. To that end each device 101 comprises a sender, e.g. adapted to send according to the GSM, UMTS or LTE standard.

Furthermore the same International Mobile Subscriber Identity and Mobile Station International Subscriber Directory Number pair is either stored on data storage in the devices 101 or on removable data storage, in particular a Subscriber Identity Module. In the latter case the device 101 is adapted to read the removable data storage. In particular the device 101 comprises a Subscriber Identity Module reader.

Furthermore the information of the time slot synchronization may be stored in the data storage or the removable data storage.

Alternatively the information of the time slot synchronization is send to the devices 101. In this case the devices 101 comprise a receiver adapted to receive data via the telecommunications network 100 containing the information of the time slot synchronization.

The devices 101 comprise for example a processor adapted to determine the time slot in which the data is to be transmitted from the information about the time slot synchronization. For example the devices 101 comprise synchronized clocks providing a start time trigger for a sending time slot and the information of the time slot synchronization is a time slot length. The time slot length may be a predetermined length in seconds. In this case the individual clocks are synchronized to provide time slots that are at least partially overlap free.

In the example depicted in figure 1 six devices 101 are used. As depicted in figure 2, each of the devices 101 send data in their respective time slot 1, 2, 3, 4, 5, 6. The time slots are for example of 60 seconds length and sending of data is triggered for each of the devices 101 for example every 360 seconds. The clocks of the individual devices 101 are in this case synchronized for example to start the data transmission sequentially every 360 seconds. In this example the sending of the individual devices 101 is repeated every 360 seconds.

Figure 2 depicts a sequence of one 360 seconds period and the start of a second sequence with the time slot 1. The time slots 1, 2, 3, 4, 5, 6 may be adjacent or with a time distance.

Preferably the time slots 1, 2, 3, 4, 5, 6 have no overlap. Sending of the time slots 1, 2, 3, 4, 5, 6 may be repeated continuously or with a predetermined pause.

Furthermore the devices 101 may be adapted to send payload data, e.g. a meter reading of a smart meter as said transmitted data. The devices 101 may be smart meters or may be connected to smart meters via a data link.

Furthermore the devices 101 may be adapted to send a unique identification with the data transmitted. The unique identification may be a numeric device identifier or alphanumeric user identification.

Sending or transmitting of data in this context may be done via the data link using the standard protocol, e.g. GMS, UMTS, LTE or any other telecommunication network protocol. Using the time slots, the same International Mobile Subscriber Identity and Mobile Station International Subscriber Directory Number pair are used for the group of devices 101.

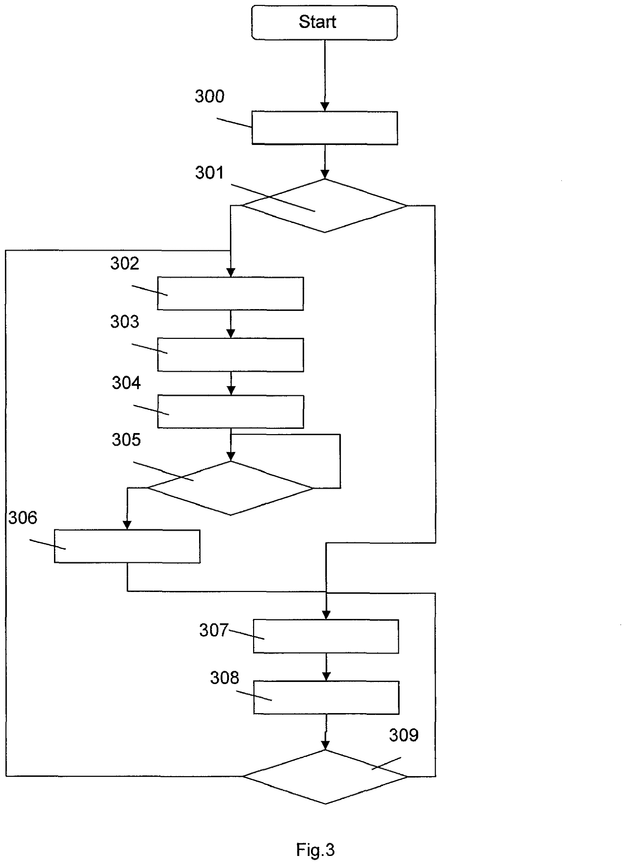

Figure 3 shows a flowchart describing the activity management of the devices 101 and the server 102. This activity management may be implemented as a computer program stored on the devices 101, the server 102 or a storage, e.g. a smart card. In the latter case the respective devices are adapted to read the computer program from storage, e.g. the smart card. Furthermore data storage may be used to store the information about the time slot synchronization. This data storage is labeled calendar file in the example below.

The calendar file has for example the following fields:

SSIM_NBR: sub number associated to the SIM card. This field is used to define the wakeup time.

PERIODE: This field is used to define the wakeup periodicity. For example an integer of days or seconds is used.

DURATION: In this field the connection duration is defined. For example an integer of seconds is used. The duration may have a tolerance, e.g. a little additional margin.

Activation Time: This optional field is used to define the activation time. For example Unix time is used. Any other time like calendar time may be used. For example 3 times the length stored in the PERIODE field is stored in the Activation Time field.

The ratio PERIODE/DURATION is for example selected to match the number of available devices 101. Alternatively the ratio PERIOD/DURATION may be selected to less than the available devices 101. In the latter case the ratio PERIODE/DURATION gives the maximum number of devices 101.

The activity management is a method that is explained making reference to figure 3. The method starts for example whenever a device 101 is powered up, e.g. connected to an electric power supply. After the start a step 300 is executed.

In step 300 the current time is determined. For example a GetTime function of an underlying operating system is used to determine a variable Time = GetTime(). For example the underlying operating system is a Unix system and the function GetTime provides the Unix time. Afterwards a step 301 is executed.

In step 301 a test is performed to determine whether the wake up time has been reached. For example the content of the field SSIM_NBR is compared to a variable threshold. The variable threshold is for example determined from the variable Time and the contents of the fields PERIOD and DURATION as

$$\texttt{Threshold = Modulo(Time,PERIOD)/ DURATION.}$$

In case said Threshold is equal to the content of the file SSIM_NBR a step 302 is executed, otherwise a step 307 is executed.

In step 302 the sending of the data, e.g. including the payload is started. According to the example each device 101 of a predetermined group of devices 101 sends the data with the same International Mobile Subscriber Identity and Mobile Station International Subscriber Directory Number pair. For example a Function Radio_Wake_up () is executed. Afterwards a step 303 is executed.

In step 303, a communication end trigger EndCom is determined. For example the communication end trigger EndCom is determined from the content of the fields DURATION, PERIOD and SSIM_NBR as follows:

$$\texttt{EndCom = DURATION - 3second + Modulo(Time,PERIOD) -}$$
$$\texttt{SSIM NBR*DURATION.}$$

Afterwards a step 304 is executed.

In step 304 a timer is started to monitor the length of the sending of data. Afterwards a step 305 is executed.

In step 305 a test is perform to determine if the timer exceeds the communication end trigger EndCom. In case the time exceeds the communication end trigger EndCom a step 306 is executed. Otherwise the timer is incremented and the step 305 is repeated.

In step 306 the sending of the date, e.g. including the payload is stopped. For example a Function Radio_Close () is executed. Afterwards a step 307 is executed.

In step 307 the current time is determined. For example the GetTime function is used to determine the variable Time = GetTime() .Afterwards a step 308 is executed.

In step 308 the next wake up trigger is determined for example as a variable NextWake from the content of the fields SSIM_NBR, DURATION and PERIOD and the variable Time as follows:

$$\texttt{NextWake = SSIM NBR * DURATION - Modulo(Time,PERIOD).}$$

Afterwards a step 309 is executed.

In step 309 the variable Time is compared to the variable NextWake. In case the Time is less than the variable NextWake, the step 307 is executed. Otherwise the step 302 is executed.

The method ends for example whenever the device 101 is powered down, e.g. by disconnecting it from electric power supply.

The pause loop of steps 305 or 309 may be substituted by a event triggered waiting routine as well.

The Function Radio_Wake_up in this example is a function that implements sending of the payload using the well known Long Term Evolution standard or any other form of communication. This function is for example executed until it is stopped by the Radio_Close function. The Radio_Close function may trigger a termination of sending of the payload using the Long Term Evolution standard or may include any other form of communication termination.

Optionally the previously described mechanisms are also applicable if SIM cards have different International Mobile Subscriber Identities, well known as IMSI.

Optionally in case updates to the information about the time slot synchronization is sent to the device 101, additionally a pause loop may be started upon receipt of at least a part of the information. The pause loop is executed before storing the information about the time slot synchronization in the respective fields and before sending of data according to the new time slot synchronization is started.

According to the example, during the pause loop, the Time variable is compared to the content of the Activation Time field. The pause loop runs until the Activation Time has passed or the time slot synchronization information has been received successfully. In the example 3 times the length stored in the PERIODE field is waited before storing the newly received data This provides a recovery time period for devices 101 that have problems with the receiving of the information about the time slot synchronization, e.g. the calendar file.

After the pause loop finishes, sending of the data is continued considering the content stored in the fields, i.e. either the new synchronization schedule or the old one.

The server 102 comprises a receiver adapted to receive the data transmitted by the devices 101. The server 102 comprises a processor adapted to store the data in particular in a data base. Furthermore the server 102 may be adapted to determine from the received data the unique identifier, e.g. the unique device identifier or the unique user identification and the payload data, e.g. the meter reading and store it.

For example the data transmitted is the reading of the individual smart meters that are owned by an individual. In this case all meter readings may be stored in the user account of the user on the server 102. The server 102 may be adapted to perform additional calculations, e.g. to sum up meter reading data to update a consumption for the individual.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the figures, including any functional blocks labeled as 'processors', may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term 'processor' should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

It should be appreciated by those skilled in the art that the block diagram herein represent conceptual views of illustrative circuitry embodying the principles of the invention. Similarly, it will be appreciated that the sequence diagram represents a view on a processes which may be substantially represented in computer readable medium and so executed by a computer or processor, whether or not such computer or processor is explicitly shown.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

## Claims

1. A device (101) for transmitting data in a telecommunications network (100), wherein the device (101) is adapted to transmit data in the telecommunications network (100) in time slots (1,2,3,4,5,6), wherein the individual time slot (1,2,3,4,5,6) of the device (101) is synchronized with the time slots (1,2,3,4,5,6) of a group of devices (101) to provide for at least partially overlap free transmission of each of the devices (101) of the group of devices(101), wherein the data is transmitted with the same International Mobile Subscriber Identity or Mobile Station International Subscriber Directory Number by each of the devices (101) of the group of devices (101).

2. The device (101) according to claim 1 wherein the same International Mobile Subscriber Identity or Mobile Station International Subscriber Directory Number is stored on data storage in the device (101).

3. The device (101) according to claim 1 the same International Mobile Subscriber Identity or Mobile Station International Subscriber Directory Number is stored on removable data storage, in particular a Subscriber Identity Module.

4. The device (101) according to claim 1 wherein the information of the time slot synchronization is stored in the data storage or the removable data storage.

5. The device (101) according to claim 1 wherein the information of the time slot synchronization is send to the devices (101).

6. The device (101) according to claim 1 wherein the time slots (1,2,3,4,5,6) are of a predetermined length.

7. The device (101) according to claim 1 wherein the time slot length is the same for all devices.

8. The device (101) according to claim 1 wherein the time slot (1,2,3,4,5,6) for each device has an individual time slot length.

9. A server (102) adapted to receive data transmitted with the same International Mobile Subscriber Identity or Mobile Station International Subscriber Directory Number from a plurality of devices (101).

10. A system for transmitting data in a telecommunications network (100), wherein a plurality of devices (101) are adapted to transmit data in the telecommunications network (100) time slots(1,2,3,4,5,6), wherein the individual time slots (1,2,3,4,5,6)of the devices (101) of the group of devices (101) are synchronized to provide for at least partially overlap free transmission of each device (101), wherein the data is transmitted with the same International Mobile Subscriber Identity or Mobile Station International Subscriber Directory Number and a server (102) adapted to receive data transmitted with the same International Mobile Subscriber Identity or Mobile Station International Subscriber Directory Number from a plurality of devices (101).

11. A method for transmitting data in a telecommunications network (100), wherein a plurality of devices (101) are adapted to transmit data in the telecommunications network (100) in time slots (1,2,3,4,5,6), wherein the individual time slots (1,2,3,4,5,6) of the devices (101) of the group of devices (101) are synchronized (300, 301, 302, 303, 304, 305, 306, 307, 308, 309) to provide for at least partially overlap free transmission of each device (101), wherein the data is transmitted (302) by each device (101) of a predetermined group of devices (101) with the same International Mobile Subscriber Identity or Mobile Station International Subscriber Directory Number in particular to a server (102) adapted to receive data transmitted with the same International Mobile Subscriber Identity or Mobile Station International Subscriber Directory Number from a plurality of devices (101).

101

101

101

101

100

102

101

101

Fig.1

Fig.2

Fig.3

Europäisches
Patentamt

European
Patent Office

Office européen
des brevets

# EUROPEAN SEARCH REPORT

Application Number

EP 12 30 5116

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/047332 A1 (BENSIMON MICHAEL [FR] ET AL) 11 March 2004 (2004-03-11) * figures 1-2 * * paragraph [0001] - paragraph [0051] * ----- | 1-11 | INV. H04W8/20 |
| X | WO 2010/017913 A1 (DEUTSCHE TELEKOM AG [DE]; KREBS CHRISTIAN [DE]) 18 February 2010 (2010-02-18) * page 1 - page 6 * ----- | 1-11 | |

TECHNICAL FIELDS
SEARCHED     (IPC)

H04W

The present search report has been drawn up for all claims

| Place of search | Date of completion of the search | Examiner |
|---|---|---|
| Munich | 16 April 2012 | Gavin Alarcon, Oscar |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

...............................................................................

& : member of the same patent family, corresponding
    document

EPO FORM 1503 03.82 (P04C01)

# EP 2 624 610 A1

**ANNEX TO THE EUROPEAN SEARCH REPORT
ON EUROPEAN PATENT APPLICATION NO.**

EP 12 30 5116

This annex lists the patent family members relating to the patent documents cited in the above-mentioned European search report.
The members are as contained in the European Patent Office EDP file on
The European Patent Office is in no way liable for these particulars which are merely given for the purpose of information.

16-04-2012

| Patent document cited in search report | | Publication date | Patent family member(s) | | Publication date |
|---|---|---|---|---|---|
| US 2004047332 | A1 | 11-03-2004 | AT | 449520 T | 15-12-2009 |
| | | | CN | 1469681 A | 21-01-2004 |
| | | | EP | 1377103 A1 | 02-01-2004 |
| | | | ES | 2336903 T3 | 19-04-2010 |
| | | | FR | 2841087 A1 | 19-12-2003 |
| | | | JP | 2004040783 A | 05-02-2004 |
| | | | US | 2004047332 A1 | 11-03-2004 |
| WO 2010017913 | A1 | 18-02-2010 | CA | 2734094 A1 | 18-02-2010 |
| | | | CN | 102124805 A | 13-07-2011 |
| | | | DE | 102008037725 A1 | 18-02-2010 |
| | | | EP | 2327266 A1 | 01-06-2011 |
| | | | JP | 2011530909 A | 22-12-2011 |
| | | | KR | 20110053240 A | 19-05-2011 |
| | | | US | 2011161503 A1 | 30-06-2011 |
| | | | WO | 2010017913 A1 | 18-02-2010 |